# EUROPÄISCHE PATENTSCHRIFT

(11) **EP 2 240 985 B1**
(45) Veröffentlichungstag und Bekanntmachung des Hinweises auf die Patenterteilung: **24.08.2011**
(21) Anmeldenummer: 09707653.3
(22) Anmeldetag: 03.02.2009
(51) Int. Cl.: H02B 1/40

(54) **INSTALLATIONSKASTEN, INSBESONDERE VERTEILERKASTEN, ZUR AUFPUTZINSTALLATION**
INSTALLATION BOX, IN PARTICULAR DISTRIBUTION BOX FOR SURFACE WIRING
BOITE D'INSTALLATION ELECTRIQUE, NOTAMMENT BOITE DE DISTRIBUTION, POUR MONTAGE APPARENT

(30) Priorität: 04.02.2008 DE 102008008163
(43) Veröffentlichungstag der Anmeldung: 20.10.2010
(73) Patentinhaber: Hager Electro GmbH & Co. KG, 66440 Blieskastel (DE)
(72) Erfinder: THEUER, Markus, 66131 Saarbrücken (DE); PRAT, Julio, Milà, E-08402 Granollers (ES); NÚNEZ, Sergi, Tornos, E-08520 Les Franqueses del Vallès (ES)
(74) Vertreter: Bernhardt, Reinold
(86) Internationale Anmeldenummer: PCT/DE2009/000165
(87) Internationale Veröffentlichungsnummer: WO 2009/097844

(56) Entgegenhaltungen:
- EP-A- 0 123 788
- EP-A- 0 910 146
- BE-A3- 1 014 830

## Beschreibung

Die Erfindung betrifft einen Installationskasten, insbesondere Verteilerkasten, zur Aufputzinstallation, mit einem Trägerboden und einer Haube, die eine Vorderwand und Seitenwände aufweist und auf den Trägerboden aufsetzbar ist, wobei an einer Randseite des Trägerbodens von dem Trägerboden eine Wand vorsteht, die Wand Schwachstellen für die Bildung rundum geschlossener Öffnungen in der Wand aufweist und die betreffende Seitenwand der Haube mit einer wenigstens die Öffnungen freigebenden Randaussparung am freien Rand versehen ist.

Ein solcher Installationskasten ist aus der BE 1 014 803 A3 sowie aus der EP 0 123 788 A bekannt.

Ferner sind durch Benutzung Installationskästen bekannt, bei denen einander gegenüberliegende Seitenwände der Haube Schwachstellen für die Bildung von Randausnehmungen aufweisen, durch die hindurch sich zur Wand hin einseitig offene Kabelkanäle verlegen lassen. Bei der Verlegung von runden Kabelrohren als Schutzummantelung lässt sich eine am Kasten verbleibende Öffnung nicht vermeiden, weil das betreffende Rohr bei der Demontage der Haube aus der Randausnehmung seitlich herausführbar sein muss.

Der Erfindung liegt die Aufgabe zugrunde, einen neuen, universeller einsetzbaren Installationskasten, insbesondere Verteilerkasten, der eingangs genannten Art zu schaffen.

Der diese Aufgabe lösende Installationskasten nach der Erfindung ist dadurch gekennzeichnet, dass die Seitenwand der Haube, welche der die Randaussparung aufweisenden Seitenwand gegenüberliegt, Schwachstellen zur Bildung von Randaussparungen am freien Rand aufweist.

Vorteilhaft können z.B. kreisrunde Schutzrohre für darin verlegte Kabel in den Kasten eingeführt werden. Am Kasten verbleibt dadurch keinerlei Öffnung. Die Lösbarkeit der Haube vom Trägerboden ist durch die genannte Randaussparung in der Seitenwand der Haube gesichert.

Der Installationskasten kann somit in gleichem Maße sowohl in Verbindung mit Kabelkanälen als auch in Verbindung mit Rohren genutzt werden, insbesondere dann, wenn gemäß einer weiteren vorteilhaften Ausführungsform der Erfindung der Trägerboden symmetrisch in Bezug auf eine Mittelebene der Trägerplatte, insbesondere eine horizontale Mittelebene, ausgebildet ist. Je nachdem ob Rohre oder Kabelkanäle verlegt werden sollen, wird dann als Eingangsseite für die Rohre bzw. Kabelkanäle die eine oder andere Seitenwand des Installationskastens benutzt.

Auch die Wand kann wenigstens eine Schwachstelle für die Bildung einer Ausnehmung zum Einführen eines Kabelkanals aufweisen.

Die vorstehende Wand greift zweckmäßig zwischen einem verbliebenen Endabschnitt der betreffenden Seitenwand und an diesen Endabschnitt angeformten Klemmnasen ein, so dass der Kasteninnenraum stabil verschlossen ist. Statt der Klemmnasen könnte auch eine an der Randaussparung gebildete Nut vorgesehen sein, in welche ein z.B. abgeschwächter Randsteg der vom Trägerboden vorstehenden Wand eingreift.

Zweckmäßig sind an der vorstehenden Wand Schwachstellen zur Bildung kreisrunder Löcher vorgesehen. Vorzugsweise sind Schwachstellen für Öffnungen mit unterschiedlichen Durchmessern ineinander verschachtelt, wobei insbesondere die verschachtelten Schwachstellen an einem dem Trägerboden nächstliegenden Punkt einander tangieren. Somit ist gesichert, dass bei der Bildung von Durchgangsöffnungen mit unterschiedlichen Durchmessern die Durchgangsöffnung stets den gleichen Abstand zur Oberfläche des Trägerbodens hat, hindurchgeführte Kabel also immer nahe dem Boden in den Kasten eingeführt und daran durch Kabelbinder befestigt werden können.

Die Erfindung wird nachfolgend anhand eines Ausführungsbeispiels und der beiliegenden, sich auf dieses Ausführungsbeispiel beziehenden Zeichnungen weiter erläutert. Es zeigen:

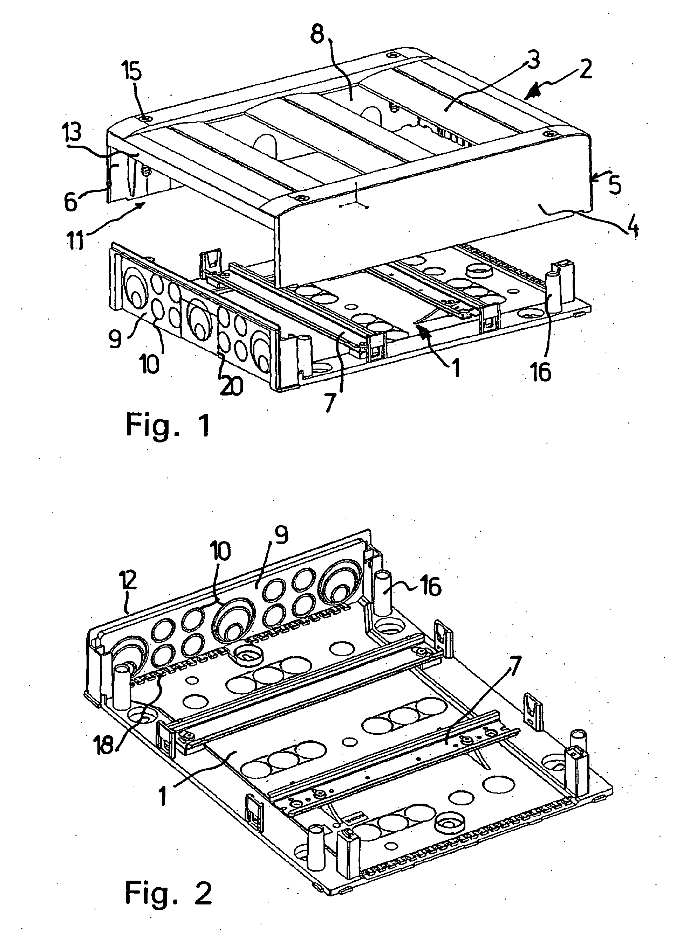

- Fig. 1: einen erfindungsgemäßen Aufputzverteilerkasten in perspektivischer Explosionsdarstellung,

- Fig. 2: einen Trägerboden des Verteilerkastens von Fig. 1 in perspektivischer Dar- stellung,

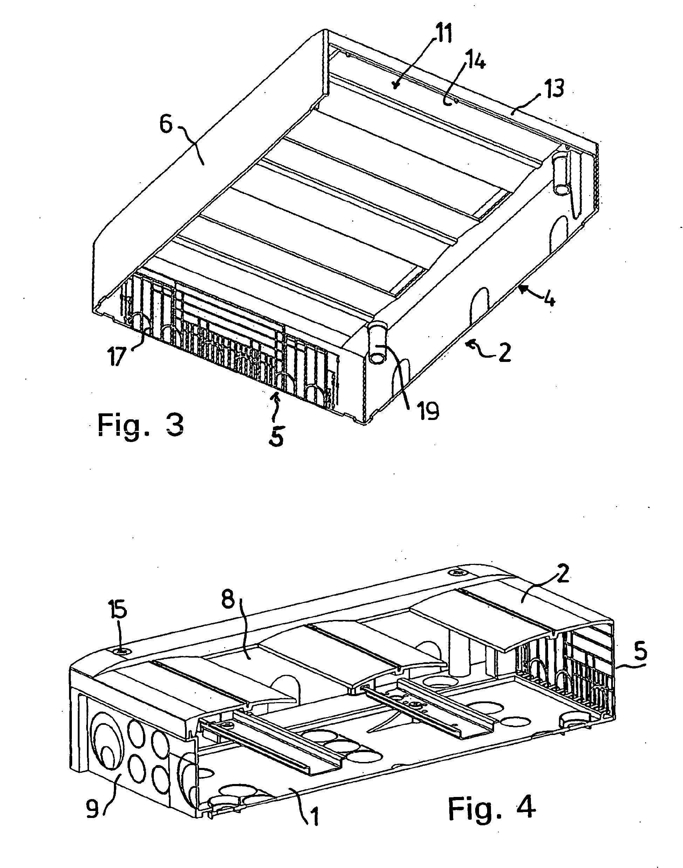

- Fig. 3: eine Haube des Aufputzverteilerkastens von Fig. 1 in einer perspekti- vischen Ansicht schräg von unten, und
- Fig. 4: den Verteilerkasten von Fig. 1 in einer längsgeschnittenen perspekti- vischen Ansicht.

Ein Aufputzverteilerkasten weist einen Trägerboden 1 und eine auf den Trägerboden 1 aufsetzbare Haube 2 mit einer Vorderwand 3 und Seitenwänden 4 bis 6 auf. Auf dem Trägerboden 1 sind zwei Hutschienen 7 für die Aufnahme von Geräten montiert. An den Geräten vorgesehene Schalter sind durch Öffnungen 8 in der Vorderwand 3 hindurch zugänglich.

An einer Randseite des Trägerbodens 1 erstreckt sich von dem Trägerboden eine Wand 9, in der kreisrunde Schwachstellen 10 für die Bildung von Durchgangsöffnungen für Rohre vorgesehen sind. Eine Schwachstelle bei 20 erlaubt die Herstellung einer Öffnung für einen Kabelkanal.

Die Haube 2 weist eine Randaussparung 11 für die Aufnahme der Wand 9 auf, wobei von der Wand 9 ein abgeschwächter Randsteg 12 vorsteht, der zwischen einem verbliebenem Abschnitt 13 der vierten Seitenwand der Haube 2 und drei daran angeformten Klemmnasen 14 einklemmbar ist.

Die Haube 2 lässt sich mit Hilfe von vier Schrauben 15 an dem Trägerboden 1 befestigen, wobei die Schrauben in von dem Trägerboden vorstehende Gewindehülsen 16 eindrehbar sind. Die Haube 2 sitzt mit vorstehenden Hülsen 19 auf den Gewindehülsen 16 auf.

Die der Seitenwand mit der Randausnehmung 11 gegenübediegende Seitenwand 5 der Haube 2 ist mit Schwachstellen 17 zum Ausbrechen von Randausnehmungen versehen.

Unmittelbar angrenzend an die Wand 9 ist am Trägerboden 1 eine Reihe von Haltestegen 18 gebildet, an denen sich Kabelbinder befestigen lassen. Eine eben solche Reihe von Haltestegen befindet sich am entgegengesetzten Ende des Trägerbodens.

Dem vorangehend beschriebenen Aufputzverteilerkasten können Kabel sowohl in Rohren als auch einseitig offenen Kabelkanälen als Schutzummantelung zugeführt werden.

Sind Rohre für zugeführte Kabel vorgeschrieben, so wird die Kastenseite mit der vorstehenden Wand 9 als Eingangsseite benutzt und je nach Rohrdurchmesser eine geeignete Schwachstelle zur Bildung einer kreisrunden Rohrdurchgangsöffnung ausgewählt.

Soll die Zuführung von Kabeln in einem Kabelkanal erfolgen, so wird der Verteilerkasten, der in Bezug auf eine horizontale Mittenebene weitgehend symmetrisch ausgebildet ist, in umgekehrter Anordnung verwendet und aus der Seitenwand 5 der Haube 2 eine geeignete Randausnehmung für die Durchführung des zur Wand hin offenen Kabelkanals ausgebrochen.

## Patentansprüche

1. Installationskasten, insbesondere Verteilerkasten, zur Aufputzinstallation, mit einem Trägerboden (1) und einer Haube (2), die eine Vorderwand (3) und Seitenwände (4,5,6,13) aufweist und auf dem Trägerboden aufsetzbar ist, wobei an einer Randseite des Trägerbodens (1) von dem Trägerboden (1) eine Wand (9) vorsteht,
die Wand (9) Schwachstellen (10) für die Bildung rundum geschlossener Öffnungen in der Wand (9) aufweist und
die betreffende Seitenwand (13) der Haube mit einer wenigstens die Öffnungen freigebenden Randaussparung (11) am freien Rand versehen ist,
**dadurch gekennzeichnet,**
**dass** die Seitenwand (5) der Haube (2), welche der die Randaussparung (11) aufweisenden Seitenwand (13) gegenüberliegt, Schwachstellen (17) zur Bildung von Randaussparungen am freien Rand aufweist.

2. Installationskasten nach Anspruch 1,
**dadurch gekennzeichnet,**
**dass** der Trägerboden (1) symmetrisch in Bezug auf eine Mittelebene, insbesondere horizontale Mittelebene, des Trägerbodens (1) ausgebildet ist.

3. Installationskasten nach Anspruch 1 oder 2,
**dadurch gekennzeichnet,**
**dass** auf dem Trägerboden (1) eine an die Wand (9) angrenzende Reihe von Halteelementen (18) für Kabelbinder vorgesehen ist.

4. Installationskasten nach einem der Ansprüche 1 bis 3,
**dadurch gekennzeichnet,**
**dass** die Wand (9), insbesondere mit einem abgeschwächten Randsteg (12), zwischen einem verbliebenen Abschnitt (13) der Seitenwand und an den Wandabschnitt (13) angeformten Klemmnasen (14) eingreift.

5. Installationskasten nach einem der Ansprüche 1 bis 4,
**dadurch gekennzeichnet,**
**dass** die Schwachstellen (10) in der Wand (9) zur Bildung kreisrunder Durchgangsöffnungen vorgesehen sind.

6. Installationskasten nach einem der Ansprüche 1 bis 6,
**dadurch gekennzeichnet,**
**dass** Schwachstellen (10) zur Bildung von Öffnungen in der Wand (9) mit unterschiedlichen Durchmessern ineinander verschachtelt sind.

7. Installationskasten nach Anspruch 6,
**dadurch gekennzeichnet,**
**dass** sich die verschachtelten Schwachstellen (10) an einem dem Trägerboden (1) nächstliegenden Punkt tangieren.

## Claims

1. Installation box, in particular a distribution box, for surface mounting, having a support base (1) and a cover (2) which has a front wall (3) and side walls (4, 5, 6, 13) and can be fitted on the support base, one wall (9) projecting from the support base (1) on an edge side of the support base (1), the wall (9) having weak points (10) for forming completely closed openings in the wall (9), and
the relevant side wall (13) of the cover being provided with an edge cutout (11), which exposes at least the openings, at the free edge,
**characterized**
**in that** the side wall (5) of the cover (2), which side wall is situated opposite the side wall (13) which has the edge cutout (11), has weak points (17) for forming edge cutouts at the free edge.

2. Installation box according to Claim 1,
**characterized**
**in that** the support base (1) is formed symmetrically in relation to a center plane, in particular a horizontal center plane, of the support base (1).

3. Installation box according to Claims 1 or 2,
**characterized**
**in that** a row of retaining elements (18) for cable connectors, which row adjoins the wall (9), is provided on the support base (1).

4. Installation box according to one of Claims 1 to 3,
**characterised in that** the wall (9) engages, in particular by way of a weakened edge web (12), between a remaining section (13) of the side wall and clamping lugs (14) which are integrally formed on the wall section (13).

5. Installation box according to one of Claims 1 to 4,
**characterized**
**in that** the weak points (10) in the wall (9) are provided to form round passage openings.

6. The installation box according to one of Claims 1 to 5,
**characterized**
**in that** weak points (10) for forming openings in the wall (9) with different diameters are nested one in the other.

7. Installation box according to Claim 6,
**characterized**
**in that** the nested weak points (10) are tangential at a point which is closest to the support base (1).

## Revendications

1. Coffret d'installation électrique, en particulier coffret de distribution, pour l'installation en applique, comprenant un fond porteur (1) et un capot (2), lequel comporte une paroi avant (3) et des parois latérales (4, 5, 6, 13) et est susceptible d'être posé sur le fond porteur, dans lequel une paroi (9) est dressée depuis le fond porteur (1) au niveau d'un côté de bordure du fond porteur (1),
la paroi (9) comporte des emplacements affaiblis (10) pour la formation d'ouvertures fermées sur tout leur pourtour dans la paroi (9), et
la paroi latérale concernée (13) du capot est pourvue sur la bordure libre d'une échancrure de bordure (11) qui libère au moins les ouvertures,
**caractérisé en ce que**
la paroi latérale (5) du capot (2), qui se trouve à l'opposé de la paroi latérale (13) présentant l'échancrure de bordure (11), comporte des emplacements affaiblis (17) au niveau de la bordure libre pour la formation d'échancrures de bordure.

2. Coffret d'installation électrique selon la revendication 1,
**caractérisé en ce que** le fond porteur (1) est réalisé symétrique par référence à un plan médian, en particulier un plan médian horizontal, du fond porteur (1).

3. Coffret d'installation électrique selon la revendication 1 ou 2,
**caractérisé en ce qu'**une rangée, adjacente à la paroi (9), d'éléments de retenue (18) pour des serres-câble est prévue sur le fond porteur (1).

4. Coffret d'installation électrique selon l'une des revendications 1 à 3,
**caractérisé en ce que** la paroi (9) s'engage, en particulier avec une barrette de bordure affaiblie (12), entre un tronçon restant (13) de la paroi latérale et des ergots de coincement (14) conformés sur le tronçon de paroi (13).

5. Coffret d'installation électrique selon l'une des revendications 1 à 4,
**caractérisé en ce que** les emplacements affaiblis (10) dans la paroi (9) sont prévus pour la formation d'ouvertures traversantes circulaires.

6. Coffret d'installation électrique selon l'une des revendications 1 à 5,
**caractérisé en ce que** les emplacements affaiblis (10) sont imbriqués les uns dans les autres pour former dans la paroi (9) des ouvertures avec des diamètres différents.

7. Coffret d'installation électrique selon la revendication 6,
**caractérisé en ce que** les emplacements affaiblis imbriqués (10) sont tangents les uns aux autres en un point qui se trouve au plus proche du fond porteur (1).
